# EUROPÄISCHE PATENTSCHRIFT

(11) **EP 0 724 614 B1**
(45) Veröffentlichungstag und Bekanntmachung des Hinweises auf die Patenterteilung: **02.05.1997**
(21) Anmeldenummer: 94931540.2
(22) Anmeldetag: 21.10.1994
(51) Int. Cl.: C09J 5/00, E21D 20/02, F16B 13/14

(54) **GLASRÖHRCHEN ENTHALTEND ZWEIKOMPONENTENKLEBER, VERFAHREN ZUR HERSTELLUNG UND IHRE VERWENDUNG**
SMALL GLASS TUBE CONTAINING TWO-COMPONENT ADHESIVE, PROCESS FOR PRODUCING THE SAME AND ITS USE
PETIT TUBE EN VERRE CONTENANT DE LA COLLE A DEUX COMPOSANTS, SON PROCEDE DE FABRICATION ET SON UTILISATION

(30) Priorität: 23.10.1993 DE 4336216
(43) Veröffentlichungstag der Anmeldung: 07.08.1996
(73) Patentinhaber: KOCH MARMORIT GmbH, 79283 Bollschweil (DE)
(72) Erfinder: BANHARDT, Volker, D-79282 Ballrechten-Dottingen (DE); KOBERSKI, Ulrich, D-79843 Löffingen-Dittishausen (DE)
(74) Vertreter: Werner, Hans-Karsten, Dr.Dipl.-Chem.
(86) Internationale Anmeldenummer: EP9403472
(87) Internationale Veröffentlichungsnummer: WO9511285

(56) Entgegenhaltungen:
- EP-A- 0 209 080
- EP-A- 0 249 701
- BE-A- 789 698
- FR-A- 1 253 773

## Beschreibung

Gegenstand der vorliegenden Erfindung sind ein beidseitig verschlossenes lagerfähiges Glasröhrchen, enthaltend beide Komponenten eines Zweikomponentenklebers, sowie Fasern oder Späne, welche geeignet sind, den Zweikomponentenkleber und die Fasern oder Späne in Bohrlöcher einzubringen zum Verankern von Befestigungselementen, insbesondere von Schrauben, Ankern, Spanneisen und Bolzen, sowie Verfahren zur Herstellung derselben und ihre Verwendung.

Aus der WO 92/18697 ist ein Verfahren und Mittel zum Verankern von Befestigungselementen in Bohrlöchern bekannt, wobei die Bohrlöcher mit einem verdichtungsfähigen Gemisch aus hochverschleißfesten Fasern oder Spänen aus Metallen, Polymeren und/oder Keramik mit durchschnittlichen Längen kleiner als der halbe Bohrlochdurchmesser gefüllt werden, woraufhin nacheinander oder gleichzeitig die beiden Komponenten des Klebers eingebracht und dann der restliche Teil der erforderlichen Menge an Fasern oder Spänen eingefüllt wird. Weiterhin wird hierin beschrieben, ein verdichtungsfähiges Gemisch aus hochverschleißfesten Fasern oder Spänen mit den beiden Komponenten des Klebers zu einer knetbaren Masse zu verarbeiten, welche in die Bohrlöcher eingedrückt wird.

Dieses Verfahren und diese Mittel zum Verankern von Befestigungselementen in Bohrlöchern haben sich ausgezeichnet bewährt, da es zu bisher nicht bekannten Festigkeiten führt. Ein Nachteil dieses Verfahrens und dieser Mittel ist, daß sie vor Ort hergestellt werden müssen. Besondere Schwierigkeiten bereitet dieses Verfahren bei Bohrlöchern in Decken. Aber schon das Einbringen dieser Mittel in waagerechte Bohrlöcher ist mit gewissen Schwierigkeiten verbunden.

Es ist bekannt, Glaspatronen zu verwenden, welche mehrere Komponenten eines Kunstharzes und Quarzsand enthalten, wobei in einem in der Glaspatrone befindlichen eingeschlossenen kleineren verschlossenen Glasröhrchen ein spezieller Härter vorhanden ist, der die Polymerisation des Kunstharzes auslöst. Diese Glasröhrchen werden in das Bohrloch eingesetzt und beim Einbringen des Befestigungselementes zerstört, wobei sich ein erhärtender Kunststoffmörtel bildet, der das Befestigungselement im Bohrloch einbindet. Diese Patronen und damit hergestellten Verbundanker sind ausführlich beschrieben im Kunststoff-Handbuch 10., DUROPLASTE, Hanser 1988, Seiten 881 bis 883, sowie in der FR-A-1,253,773.

Der Nachteil dieser Glaspatronen ist, daß sie nicht für durch Polyaddition reagierende Zweikomponentenkleber geeignet sind, welche aus zwei annähernd gleichgroßen Mengen der beiden Komponenten bestehen. Das Einbringen einer etwa gleichgroßen Menge eines Zweikomponentenklebers in einem geschmolzenen Röhrchen, welches in ein größeres abgeschmolzenes Röhrchen eingebracht werden muß, ist schon aus räumlichen Gründen sehr schwierig. Noch schwieriger ist es, in dieses Gemisch auch noch die notwendige Menge an Fasern oder Spänen einzubringen.

Ein weiterer Nachteil der Glaspatronen nach dem Stand der Technik ist die relativ niedrige Wärmebeständigkeit der entstehenden Kunstharze sowie die Empfindlichkeit gegen Alkali und Feuchtigkeit.

Die EP-A-0 209 080 beschreibt einen Klebstoff, der aus verschiedenen Fluiden besteht, die ungehärtete, aber härtbare fließfähige Harze enthalten. Er liegt in Form von aneinander angrenzenden Depots vor, die zwar aneinanderstoßen, aber durch dünne, flexible, zerreißbare Filme getrennt sind. Diese Materialien müssen sofort nach dem Einfüllen auf Temperaturen von -23,3°C (-10°F) gekühlt werden (vgl. Spalte 1, Zeile 44 und Spalte 3, Zeile 55). Dies sind sehr aufwendige Maßnahmen, die für die Praxis nicht akzeptabel sind.

Die EP-A-0 249 701 beschreibt einen Epoxyharzkleber, dessen Komponenten voneinander getrennt gelagert werden. Hierzu ist es aber notwendig, die Viskosität durch Geliermittel zu erhöhen. Diese Verdickung ist notwendig, um eine Durchmischung bis zum Erreichen des Gelzustandes zu verhindern. Die zu gelierende Komponente wird dazu auf höhere Temperaturen erhitzt. Die zweite Komponente wird erst zugegeben, wenn die erste geliert ist. Auch dies sind sehr aufwendige Maßnahmen während der Produktion.

Die BE-A-789 698 verwendet die Komponenten in mikroverkapselter Form. Dies ist eine wesentlich teurere und aufwendigere Methode zur Trennung der Komponenten eines Zweikomponentenklebers.

Die Erfindung hat sich somit die Aufgabe gestellt, die beiden Komponenten eines durch Polyaddition reagierenden Zweikomponentenklebers und die notwendige Menge von Fasern oder Spänen in einer Glaspatrone zur Verfügung zu stellen, die leicht herstellbar, gut lagerfähig und leicht handhabbar ist, so daß die bewährten Komponenten gemäß WO 92/18697 auch in waagerechte Bohrlöcher bzw. in Bohrlöcher in Decken eingebracht werden können. Weiterhin sollten die entstehenden Verankerungen beständig sein gegen Wärme, Alkali und Feuchtigkeit.

Diese Aufgaben konnten jetzt überraschend einfach gelöst werden durch beidseitig verschlossene Glasröhrchen, enthaltend mindestens je eine Portion der Gemische A und B, wobei Gemisch A aus einem bei Raumtemperatur viskosen und bei höheren Temperaturen flüssigen Gemisch aus der ersten Komponente eines durch Polyaddition reagierenden Zweikomponentenklebers und darin eingelagerten Fasern oder Spänen besteht, und Gemisch B aus einem bei Raumtemperatur viskosen und bei höheren Temperaturen flüssigen Gemisch aus der zweiten Komponente eines Zweikomponentenklebers und darin eingelagerten Fasern oder Spänen besteht, wobei die Gemische A und B direkt flächig miteinander in Berührung stehen und dabei räumlich so in dem Glasröhrchen angeordnet sind, daß auf möglichst vielen Schnittebenen senkrecht zur Längsachse des Glasröhrchens sowohl Anteile des Gemisches A als auch Anteile des Gemisches B vorhanden sind, so daß eine weitgehende axiale Überlagerung der Gemische über die Länge des Glasröhrchens besteht.

Es hat sich nämlich herausgestellt, daß die Gemische A und B gleichzeitig oder nacheinander portionsweise bei erhöhter Temperatur durch separate Zuführungsrohre in ein unten verschlossenes Glasröhrchen eingefüllt werden können. Läßt man diese Röhrchen bewegungsarm abkühlen, bildet sich nur an der Berührungsstelle der beiden Gemische ein dünnes Häutchen aus ausgehärteten Zweikomponentenklebern. Die Hauptmenge der beiden Komponenten bleibt durch dieses sich bildende Häutchen voneinander getrennt. Die Hauptmengen reagieren somit erst, wenn sie in ein Bohrloch eingebracht durch Eindrehen oder Einschlagen des Befestigungselementes miteinander vermischt werden. Da die beiden Gemische auch schon die notwendige Menge an Fasern oder Spänen enthalten, bildet sich nach dem Zerstören des Glasröhrchens und dem Vermischen der beiden Gemische A und B ein vergleichbares aushärtendes Gemisch wie beim Verfahren gemäß WO 92/18697.

Um eine gute Vermischung und Reaktion der beiden Komponenten des Zweikomponentenklebers im Bohrloch zu gewährleisten, sollte das Befestigungselement nach dem Zerstören des Glasröhrchens gedreht und/oder vibriert werden. Dies erfolgt am einfachsten mit einer Bohrmaschine oder Schlagbohrmaschine. Es sollte daher dafür gesorgt werden, daß in möglichst vielen Schnittebenen senkrecht zur Längsachse des Glasröhrchens sowohl Anteile des Gemisches A als auch Anteile des Gemisches B vorhanden sind.

Dies wird optimal erreicht, wenn die Portionen der Gemische A und B in Achsrichtung parallel nebeneinander angeordnet sind und ihre Querschnitte annähernd die Form von aneinander angrenzenden Kreissegmenten aufweisen. Zu diesem Zweck werden die Gemische A und B gleichzeitig durch getrennte Zuleitungsrohe, die vorzugsweise durch eine dünne Trennwand voneinander getrennt sind, in unten verschlossene Glasröhrchen eingefüllt. Bei nur je einem Zuleitungsrohr entstehen zwei halbkreisförmige Segmente. Bei je zwei über Kreuz an-geordneten Zuleitungsrohren entstehen annähernd viertelkreisförmige Segmente der Gemische A und B. Es ist zwar prinzipiell möglich, noch mehr Zuleitungsrohre zu verwenden. Dies ist aber nur aufwendiger und im Grunde nicht nötig, da bereits halbkreisförmige Segmente durch die Dreh-bewegung des Befestigungselementes gut miteinander vermischt werden können.

Eine weitere Möglichkeit besteht darin, daß die Portionen A und B schräg aufeinanderliegend angeordnet sind und annähernd die Form von aneinander angrenzenden schräg geschnittenen Scheiben einer Säule aufweisen. Vorzugsweise beträgt der Neigungswinkel der Scheiben bezogen auf die Längsachse der Röhrchen annähernd 45°. Es können aber auch Neigungswinkel im Bereich zwischen 30 und 60° gewählt werden, sofern dies aus fertigungstechnischen Gründen erwünscht ist. Es entstehen so schräge Scheiben einer Säule, die wiederum durch Reaktion der Gemische A und B an der Berührungsfläche Trennhäutchen aufweisen und dadurch unbegrenzt lagerfähig sind.

Die Herstellung dieser Ausführungsform der erfindungsgemäßen Glasröhrchen erfolgt dadurch, daß die Gemische A und B nacheinander portionsweise in entsprechend schräg gestellte oben offene Glasröhrchen eingefüllt werden.

Bei dem portionsweisen Einfüllen der Gemische A und B nacheinander in den Röhrchen ist darauf zu achten, daß die Schichten weder zu dick noch zu dünn sind. Zu viele dünne Schichten führen zu erhöhtem vorzeitigem Verbrauch des Zweikomponentenklebers an den Grenzflächen. Außerdem ist die Mindestdicke der Schicht begrenzt durch die größte Korngröße der eingelagerten Fasern oder Späne. Bei zu dicken Schichten und nicht ausreichendem Neigungswinkel befinden sich auf zu wenigen Schnittebenen senkrecht zur Längsachse der Glasröhrchen ausreichende Anteile beider Gemische. Es ist dann nicht mehr möglich, durch einfache Dreh-bewegung die Gemische A und B im Bohrloch ausreichend miteinander zu vermischen.

Gewünschtenfalls können die erfindungsgemäßen Glasröhrchen unmittelbar nach der Befüllung oben abgeschmolzen und damit verschlossen werden. Besonders einfach und vorteilhaft ist es darüber hinaus, die Röhrchen dadurch oben zu verschließen, indem sie dort mit einer dünnen aushärtenden Schicht des Zweikomponentenklebers mit oder ohne eingelagerten Fasern oder Spänen bedeckt werden. Diese Schicht des Zweikomponentenklebers härtet aus und bildet einen einfachen und haltbaren Verschluß, der mit allen notwendigen Komponenten gefüllten Glasröhrchen.

Als Komponenten von Zweikomponentenklebern kommen prinzipiell die gleichen in Frage, die bereits in der WO 92/18697 ausführlich beschrieben sind. Insbesondere handelt es sich um aliphatische und cycloaliphatische Epoxidharze mit mono- und bifunktionellen Reaktivverdünnern und Haftvermittlern sowie um aliphatische und/oder cycloaliphatische Polyamine, Polyamidoamine, Mannichbasen sowie Haftvermittler und gegebenenfalls Beschleuniger der zweiten Komponente. Als zweite Komponente sind auch mehrwertige Thioalkohole mit Haftvermittlern und gegebenenfalls Beschleunigern geeignet. Ebenfalls gut geeignet sind Zweikomponentenkleber auf Basis von Diisocyanaten mit Haftvermittlern und üblichen Zusätzen einerseits und mehrfunktionellen Alkoholen mit Haftvermittlern und Hilfsmitteln andererseits, die zu Polyurethanen führen.

Selbstverständlich kann einer oder beiden Komponenten des Zweikomponentenklebers wieder ein Fungizid zugesetzt werden, so daß insbesondere bei Bohrlöchern in Holz der Befall durch Pilze verhindert oder verlangsamt werden kann.

Als Späne oder Fasern kommen prinzipiell die gleichen Materialien in Frage, die bereits in der WO 92/18697 beschrieben sind. Besonders bevorzugt sind Metallspäne, wobei wiederum darauf zu achten ist, daß die durchschnittliche Länge kleiner als der halbe Bohrlochdurchmesser ist.

Da sowohl Epoxidharze als auch Polyurethanharze unempfindlich sind gegen Alkali, kann den Komponenten gebrannter Kalk zugesetzt werden. Dieser Zusatz bindet Feuchtigkeit im Bohrloch, verbessert somit die Stabilität der Verankerung und erhöht die Korrosionsfestigkeit des Armierungsstahls im Bereich der Bohrlochwandung.

Der äußere Durchmesser der erfindungsgemäßen Glasröhrchen sollte etwa der gleiche sein wie der Durchmesser des einzusetzenden Befestigungselementes. Das Bohrloch sollte eine lichte Weite von 1 bis 3 mm mehr haben als der Durchmesser des Glasröhrchens und des Befestigungselementes. Ist das Bohrloch ausnahmsweise größer, kann der erhöhte Bedarf an Zweikomponentenkleber und Späne dadurch gedeckt werden, daß notfalls mehr als ein Glasröhrchen in das Bohrloch eingeführt wird, dann ist aber darauf zu achten, daß durch das eingedrehte und gegebenenfalls eingeschlagene Befestigungselement eine ausreichende Zerstörung des Glasröhrchens und eine ausreichende Vermischung der Komponenten gewährleistet ist. Eine sehr effiziente Zerstörung des Glasröhrchens und Durchmischung der Gehaltstoffe des Röhrchen erfolgt durch Befestigungselemente, die schräg angeschnitten sind und dadurch wie ein Drehmeisel und Mischer wirken.

Es bestünde an sich die Möglichkeit, das Glasröhrchen zu ersetzen durch ein anderes Material, dabei wäre jedoch darauf zu achten, daß es genauso inert und annähernd so spröde ist wie Glas, da anderenfalls nicht gewährleistet werden kann, daß die Patrone nach dem Einsetzen in dem Bohrloch rundum gleichmäßig zerstört wird und eine Durchmischung der Komponenten erfolgt. Die Glassplitter sind ein zusätzlicher inerter Füller, der in den Zweikomponentenkleber mit eingebaut wird. Diese Glassplitter beeinträchtigen somit nicht die Qualität der Verankerung der Befestigungselemente in den Bohrlöchern.

In den nachfolgenden Beispielen sind erfindungsgemäße Glasröhrchen, ihre Herstellung und ihre Verwendung näher beschrieben.

### Beispiele

Eine Stahlspänemischung der folgenden Zusammensetzung

| | |
|---|---|
| 0/0,1 mm | 20 % |
| 0,1/0,5 mm | 40 % |
| 0,5/1,2 mm | 40 % |

wird mit den folgenden Komponenten von Zweikomponentenklebern vermischt, wobei der Bindemittelanteil in Abhängigkeit von der Viskosität zwischen 10 und 33 % beträgt:

### Beispiel 1

| Harz | | Härter | |
|---|---|---|---|
| Bisphenol A - Harz | 85 % | Polyaminhärter | 95 % |
| Reaktivverdünner | 14 % | Beschleuniger | 4 % |
| Haftvermittler | 1 % | Haftvermittler | 1 % |
| | 100 % | | 100 % |

### Beispiel 2

| Harz | | Härter | |
|---|---|---|---|
| Bisphenol F - Harz | 90 % | Polyaminhärter | 94 % |
| Reaktivverdünner | 9 % | Beschleuniger | 5 % |
| Haftvermittler | 1 % | Haftvermittler | 1 % |
| | 100 % | | 100 % |

### Beispiel 3

| Harz | | Härter | |
|---|---|---|---|
| Bisphenol A - Harz | 85 % | Polyamidhärter | 95 % |
| Reaktivverdünner | 14 % | Beschleuniger | 4 % |
| Haftvermittler | 1 % | Haftvermittler | 1 % |
| | 100 % | | 100 % |

### Beispiel 4

| Harz | | Härter | |
|---|---|---|---|
| Bisphenol F - Harz | 90 % | Polyamidhärter | 94 % |
| Reaktivverdünner | 9 % | Beschleuniger | 5 % |
| Haftvermittler | 1 % | Haftvermittler | 1 % |
| | 100 % | | 100 % |

### Beispiel 5

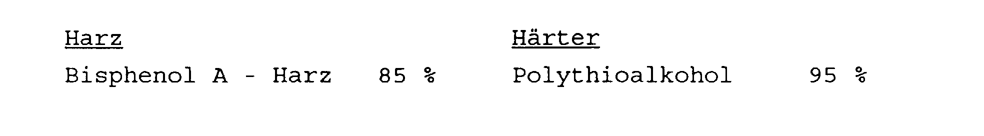

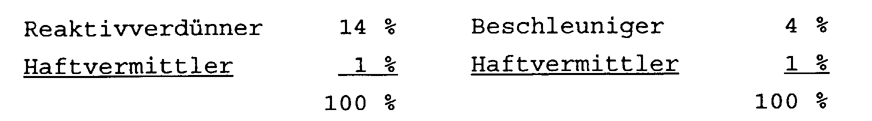

### Beispiel 6

| Harz | | Härter | |
|---|---|---|---|
| Bisphenol F - Harz | 90 % | Polythioalkohol | 95 % |
| Reaktivverdünner | 9 % | Beschleuniger | 4 % |
| Haftvermittler | 1 % | Haftvermittler | 1 % |
| | 100 % | | 100 % |

### Beispiel 7

| Harz | | Härter | |
|---|---|---|---|
| Bisphenol A - Harz | 85 % | Polyaminoamid | 95 % |
| Reaktivverdünner | 14 % | Beschleuniger | 4 % |
| Haftvermittler | 1 % | Haftvermittler | 1 % |
| | 100 % | | 100 % |

### Beispiel 8

| Harz | | Härter | |
|---|---|---|---|
| Bisphenol F - Harz | 85 % | Polyaminoamid | 94 % |
| Reaktivverdünner | 14 % | Beschleuniger | 5 % |
| Haftvermittler | 1 % | Haftvermittler | 1 % |
| | 100 % | | 100 % |

### Beispiel 9

| Harz | | Härter | |
|---|---|---|---|
| Novolak-Epoxid-Harz | 80 % | Polythioalkohol | 95 % |
| Reaktivverdünner | 19 % | Beschleuniger | 4 % |
| Haftvermittler | 1 % | Haftvermittler | 1 % |
| | 100 % | | 100 % |

### Beispiel 10

| Harz | | Härter | |
|---|---|---|---|
| Novolak-Epoxid-Harz | 90 % | Polythioalkohol | 94 % |
| Reaktivverdünner | 9 % | Beschleuniger | 5 % |
| Haftvermittler | 1 % | Haftvermittler | 1 % |
| | 100 % | | 100 % |

Diese Gemische A und B werden über zwei getrennte Zuleitungen in unten verschlossene Glasröhrchen gepumpt, und zwar gleichzeitig in etwa gleicher Menge nebeneinander, wobei zwei halbkreisförmige Säulen entstehen, die sich an der Schnittfläche berühren. Die nahezu bis zur Oberkante gefüllten Glasröhrchen werden kurze Zeit später mit einem unmittelbar zuvor hergestellten Gemisch aus Harz und Härter gleicher Zusammensetzung ohne Zusatz von Stahl spänen beschichtet. An der Berührungsfläche der beiden halbkreisförmigen Säulen entsteht ein dünnes ausgehärtetes Häutchen, welches die Hauptmengen der Komponenten A und B voneinander trennt. Aus dem Gemisch aus Harz und Härter entsteht ein dichtender Pfropf, welcher ein Auslaufen der Komponenten bis zur Benutzung verhindert. Der Einbau von Verbundankern erfolgt wie im Stand der Technik durch Eindrehen gegebenenfalls mit Vibration (Schlagbohren).

Nach dem Aushärten entstehen Verankerungen mit exzellenten Eigenschaften, die denen der WO 92/18697 entsprechen und denen gemäß Kunststoff-Handbuch loc. cit. überlegen sind.

### Beispiel 11

Für Verankerungen im feuchten Beton wird die Stahlspänemischung wie folgt geändert:

| | |
|---|---|
| 0/0,1 mm | 15 % |
| 0,1/0,5 mm | 37,5 % |
| 0,5/1,2 mm | 37,5 % |
| CaO | 10 % |

Röhrchen mit den gleichen Harzen und Härtern wie in den Beispielen 1 bis 10 ergeben Verankerungen, die auch in feuchtem Beton exzellente Eigenschaften aufweisen.

### Beispiel 12

Glasröhrchen werden mit einem Winkel von ca. 45° schräg gestellt und abwechselnd portionsweise mit den Komponenten A und B gefüllt. Es entstehen aneinander angrenzende Schichten der Komponenten in Form von schrägen Scheiben. An den Grenzflächen enstehen wiederum Häutchen, welche die Komponenten voneinander getrennt halten. Der Verschluß erfolgt wiederum durch ein frisch hergestelltes Gemisch der Komponenten A und B oder ein Gemisch aus Harz und Härter gleicher Zusammensetzung, jedoch ohne Zusatz von Stahlspänen.

Die Dicke der Scheiben beträgt 3 bis 5 mm. Bei Glasröhrchen mit einem Innendurchmesser von 10 bis 15 mm befinden sich auf jeder waagerechten Schnittebene des Röhrchens sowohl Anteile der Komponente A als auch der Komponente B. Beim Einbau in ein Bohrloch wird durch die Drehbewegung des Ankers eine ausreichend gleichmäßige Vermischung der Komponenten A und B erreicht.

## Patentansprüche

1. Beidseitig verschlossenes lagerfähiges Glasröhrchen, enthaltend mindestens je eine Portion der Gemische A und B, wobei Gemisch A aus einem bei Raumtemperatur viskosen und bei höheren Temperaturen flüssigen Gemisch aus der ersten Komponente eines durch Polyaddition reagierenden Zweikomponentenklebers und darin eingelagerten Fasern oder Spänen besteht, und Gemisch B aus einem bei Raumtemperatur viskosen und bei höheren Temperaturen flüssigen Gemisch aus der zweiten Komponente des Zweikomponentenklebers und darin eingelagerten Fasern oder Spänen besteht, wobei die Gemische A und B direkt flächig miteinander in Berührung stehen und dabei räumlich so in dem Glasröhrchen angeordnet sind, daß auf möglichst vielen Schnittebenen senkrecht zur Längsachse des Glasröhrchens sowohl Anteile des Gemisches A als auch Anteile des Gemisches B vorhanden sind, so daß eine weitgehende axiale Überlagerung der Gemische über die Länge des Glasröhrchens besteht.

2. Glasröhrchen gemäß Anspruch 1, dadurch gekennzeichnet, daß die Portionen der Gemische A und B in Achsrichung parallel nebeneinander angeordnet sind und ihre Querschnitte annähernd die Form von aneinander angrenzenden Kreissegmenten aufweisen.

3. Glasröhrchen gemäß Anspruch 1, dadurch gekennzeichnet, daß die Portionen A und B schräg aufeinanderliegend angeordnet sind und dadurch annähernd die Form von aneinander angrenzenden schräg geschnittenen Scheiben einer Säule aufweisen.

4. Glasröhrchen gemäß Anspruch 3, dadurch gekennzeichnet, daß der Neigungswinkel der Scheiben bezogen auf die Längsachse des Röhrchens annähernd 45° beträgt und die Scheiben eine Dicke aufweisen von mindestens der größten Korngröße der eingelagerten Fasern oder Späne.

5. Glasröhrchen gemäß einem der Ansprüche 1 bis 4, dadurch gekennzeichnet, daß es am oberen Ende verschlossen ist mit einer dünnen, ausgehärteten Schicht des Zweikomponentenklebers mit oder ohne eingelagerten Fasern oder Spänen.

6. Glasröhrchen gemäß einem der Ansprüche 1 bis 5, dadurch gekennzeichnet, daß mindestens eines der Gemische A oder B zusätzlich gebrannten Kalk enthält.

7. Glasröhrchen gemäß einem der Ansprüche 1 bis 6, dadurch gekennzeichnet, daß der Zweikomponentenkleber ein Epoxidharz ist.

8. Verfahren zur Herstellung von Glasröhrchen gemäß einem der Ansprüche 1 bis 7, dadurch gekennzeichnet, daß die Gemische A und B gleichzeitig oder nacheinander portionsweise bei erhöhter Temperatur durch separate Zuleitungsrohre in ein unten verschlossenes Glasröhrchen eingefüllt werden und bewegungsarm abgekühlt werden, woraufhin die Glasröhrchen verschlossen werden entweder durch Abschmelzen oder durch eine dünne, aushärtende Schicht des Zweikomponentenklebers mit oder ohne eingelagerte Fasern oder Späne.

9. Verfahren gemäß Anspruch 8, dadurch gekennzeichnet, daß die Austrittsöffnungen der Zuleitungsrohre für die Gemische A und B durch eine dünne Trennwand voneinander getrennt sind.

10. Verwendung von Glasröhrchen gemäß Ansprüchen 1 bis 7 zum Einbringen von Zweikomponentenklebern und Fasern oder Spänen in Bohrlöcher zum Verankern von Befestigungselementen, insbesondere von Schrauben, Ankern, Spanneisen und Bolzen.

## Claims

1. A storable glass tube sealed on both sides and containing at least one portion each of compositions A and B wherein composition A consists of a mixture of the first component of a two-component adhesive which will react by polyaddition, and fibers or chips incorporated therein which mixture is viscous at room temperature and liquid at elevated temperatures, and composition B consists of a mixture of the second component of a two-component adhesive and fibers or chips incorporated therein which mixture is viscous at room temperature and liquid at elevated temperatures, wherein said compositions A and B are in immediate two-dimensional contact, being located in said glass tube such that there are both portions of composition A and portions of composition B present at as many as possible intersecting planes perpendicular to the longitudinal axis of said glass tube to yield a high degree of axial juxtaposition of the compositions.

2. The glass tube according to claim 1, characterized in that said portions of compositions A and B are arranged in a parallel, side-by-side mode in the axial direction and their respective cross-sections have the approximate shape of adjacent circular segments.

3. The glass tube according to claim 1, characterized in that said portions of compositions A and B are arranged in a slantwise superimposed manner, thus having the approximate shape of adjacent, slantwise cut slices of a column.

4. The glass tube according to claim 3, characterized in that the angle of inclination of said slices with respect to the longitudinal axis of the tube is about 45° and said slices have a thickness of at least the largest grain size of the incorporated fibers or chips.

5. The glass tube according to any of claims 1 to 4, characterized by being sealed at its upper end with a thin, cured layer of said two-component adhesive with or without incorporated fibers or chips.

6. The glass tube according to any of claims 1 to 5, characterized in that at least one of compositions A and B in addition contains burnt lime.

7. The glass tube according to any of claims 1 to 6, characterized in that said two-component adhesive is an epoxy resin.

8. A process for the preparation of glass tubes according to any of claims 1 to 7, characterized in that compositions A and B are filled into a bottom-sealed glass tube at an elevated temperature through separate feeding tubes simultaneously or consecutively in portions and are cooled in a low-motion condition, followed by sealing said glass tubes either by fusing or by a thin, curable layer of said two-component adhesive with or without incorporated fibers or chips.

9. The process according to claim 8, characterized in that the outlets of said feeding tubes for compositions A and B are separated by a thin barrier.

10. Use of glass tubes according to claims 1 to 7 for introducing two-component adhesives and fibers or chips into boreholes for anchoring fastening elements, in particular screws, anchors, clamps and bolts.

## Revendications

1. Petit tube de verre fermé des deux côtés, supportant le stockage, contenant au moins une portion de chacun des mélanges A et B, le mélange A étant composé d'un mélange, visqueux à la température ambiante et liquide à des températures plus élevées, du premier composant d'une colle à deux composants réagissant par polyaddition et de fibres ou copeaux incorporés dans celui-ci, et le mélange B étant composé d'un mélange, visqueux à la température ambiante et liquide à des températures plus élevées, du second composant de la colle à deux composants et de fibres ou copeaux incorporés dans celui-ci, les mélanges A et B étant directement en contact en nappes l'un avec l'autre et disposés dans l'espace du petit tube en verre de manière qu'il existe, dans le plus grand nombre possible de plans de coupe perpendiculairement à l'axe longitudinal du petit tube de verre, des portions du mélange A ainsi que du mélange B, de sorte qu'il existe une intense superposition axiale des mélanges sur la longueur du petit tube de verre.

2. Petit tube de verre selon la revendication 1, caractérisé en ce que les portions des mélanges A et B sont disposés parallèlement l'une à côté de l'autre dans la direction de l'axe et leurs sections transversales ont approximativement la forme de segments de cercle adjacents l'un à l'autre.

3. Petit tube de verre selon la revendication 1, caractérisé en ce que les portions des mélanges A et B sont disposées empilées l'une sur l'autre obliquement et ont ainsi approximativement la forme de disques adjacents d'une colonne découpés obliquement.

4. Petit tube de verre selon la revendication 3, caractérisé en ce que l'angle d'inclinaison des disques par rapport à l'axe longitudinal du petit tube est d'environ 45° et que les disques présentent une épaisseur d'au moins la plus grande dimension des fibres ou copeaux incorporés.

5. Petit tube de verre selon l'une des revendications 1 à 4, caractérisé en ce qu'il est fermé à l'extrémité supérieure par une couche mince, durcie de la colle à deux composants avec ou sans fibres ou copeaux incorporés.

6. Petit tube de verre selon l'une des revendications 1 à 5, caractérisé en ce que au moins un des mélanges A ou B contient en plus de la chaux vive.

7. Petit tube de verre selon l'une des revendications 1 à 6, caractérisé en ce que la colle à deux composants est une résine époxy.

8. Procédé de fabrication de petits tubes de verre selon l'une des revendications 1 à 7, caractérisé en ce que les mélanges A et B sont versés, simultanément ou l'un après l'autre, par portions à température élevée par des tuyaux d'amenée séparés dans un petit tube de verre fermé à la base et sont refroidis pratiquement sans mouvement, les petits tubes en verre étant ensuite fermés soit par fusion, soit par une couche mince, durcie de la colle à deux composants avec ou sans fibres ou copeaux incorporés.

9. Procédé selon la revendication 8, caractérisé en ce que les ouvertures de sortie des tuyaux d'amenée des mélanges A et B sont séparés l'un de l'autre par une paroi de séparation mince.

10. Utilisation de petits tubes de verre selon l'une des revendications 1 à 7 pour la mise en place de colles à deux composants et de fibres ou de copeaux dans des trous forés pour l'ancrage de moyens de fixation, en particulier de vis, de boulons d'ancrage, de fers de serrage et de chevilles.
